# EUROPÄISCHE PATENTANMELDUNG

(11) **EP 2 605 200 A1**
(43) Veröffentlichungstag der Anmeldung: **19.06.2013**
(21) Anmeldenummer: 12184631.5
(22) Anmeldetag: 17.09.2012
(51) Int. Cl.: G06Q 10/06

(54) **Verfahren zur Planung einer Prozesskette für einen landwirtschaftlichen Arbeitseinsatz**

(30) Priorität: 15.12.2011 DE 102011088700
(71) Anmelder: CLAAS Selbstfahrende Erntemaschinen GmbH, 33428 Harsewinkel (DE)
(72) Erfinder: Grothaus, Hans-Peter, 33619 Bielefeld (DE); Huster, Jochen, 33330 Gütersloh (DE); Reinecke, Max, 33775 Versmold (DE); Steckel, Thilo, 33330 Gütersloh (DE)

(57) **Zusammenfassung**

Die Erfindung betrifft ein Verfahren (1) zur Planung einer Prozesskette für einen landwirtschaftlichen Arbeitseinsatz mit einer ersten Ressourcengesamtheit einer ersten Art landwirtschaftlicher Maschinen (4a, 4b), vorzugsweise Erntemaschinen wie Mähdrescher oder Feldhäcksler, und einer zweiten Ressourcengesamtheit einer zweiten Art landwirtschaftlicher Maschinen (5), wie Transportfahrzeuge, und eine Anordnung zur Durchführung des Verfahrens. Das Verfahren umfasst die Schritte: Ermittlung (10) der Anzahl der zum Einsatz kommenden Maschinen in der ersten und in der zweiten Ressourcengesamtheit in Abhängigkeit von Einsatzzeitraum, Art des Einsatzes und zu bearbeitende Feldfläche; Ermittlung (20) einer Mehrzahl von alternativen ersten Teilprozessketten (21, 21a) für die erste Ressourcengesamtheit; Ermittlung (30) mindestens einer zweiten Teilprozesskette (31, 31a) für die zweite Ressourcengesamtheit für jede der alternativen ersten Teilprozessketten (21, 21a); Kombinieren (40) der alternativen ersten Teilprozessketten (21, 21a) mit der jeweils zugehörigen mindestens einen zweiten Teilprozesskette (31, 31a) zu einer Mehrzahl von Gesamtprozessketten (41, 41a); Auswählen (50) einer (51, 51 a) der Gesamtprozessketten.

## Beschreibung

Die Erfindung betrifft ein Verfahren zur Planung einer Prozesskette für einen landwirtschaftlichen Arbeitseinsatz und eine Anordnung zur Durchführung des Verfahrens.

Unter einem landwirtsehaftlichen Arbeitseinsatz wird beispielsweise ein Erntevorgang verstanden, bei dem eine Feldfläche abgeerntet und das Erntegut in ein Lager oder Silo transportiert wird. Ein landwirtschaftlicher Arbeitseinsatz kann beispielsweise auch das Ausbringen von Dünger oder Saatgut auf einer Feldfläche sein.

Eine Prozesskette für einen solchen landwirtschaftlichen Arbeitseinsatz arbeitet mit einer ersten Ressourcengesamtheit einer ersten Art landwirtschaftlicher Maschinen. Die Maschinen der ersten Ressourcengesamtheit sind vorzugsweise von der Art Erntemaschine, insbesondere selbstfahrende Erntemaschinen, beispielsweise Mähdrescher oder Feldhäcksler. Die Maschinen der ersten Ressourcengesamtheit können beispielsweise auch Dünger oder Saatgut ausbringende Maschinen oder Kombinationen aus Zugmaschinen bzw. Traktoren und Anbaugeräten, sein. Die Maschinen der zweiten Ressourcengesamtheit sind vorzugsweise von der Art so genannter Servicemaschinen, welche die Maschinen der ersten Ressourcengesamtheit unterstützen. Solche Servicemaschinen können beispielsweise Transportfahrzeuge sein, wie Überladefahrzeuge zum Abtransport des Erntegutes oder Straßentransportfahrzeuge oder Fahrzeuge mit einem Reservoir für beispielsweise Dünger oder Saatgut zum Wiederauffüllen von Dünger oder Saatgut ausbringenden Maschinen der ersten Ressourcengesamtheit.

Neben solchen mobilen Ressourcen kann eine, insbesondere die zweite oder ggf. eine dritte oder weitere, Ressourcengesamtheit auch immobile bzw. semimobile Ressourcen wie Silos, Lagerflächen oder Container beinhalten.

Zur Bearbeitung großer Feldflächen kommen üblicherweise mehrere Maschinen sowohl der ersten Ressourcengesamtheit als auch der zweiten Ressourcengesamtheit oder auch einer dritten oder mehrerer Ressourcengesamtheiten zum Einsatz. Beim Abernten eines Feldes kommen beispielsweise mehrere Mähdrescher (erste Ressourcengesamtheit) zum Einsatz, deren Korntanks während des Ernteeinsatzes mehrmals von Überladefahrzeugen (zweite Ressourcengesamtheit) abgetankt werden und wobei die Überladefahrzeuge das Erntegut an Straßentransportfahrzeuge (dritte Ressourcengesamtheit) abgeben, die das Erntegut beispielsweise in ein Lager oder Silo (vierte Ressourcengesamtheit) verbringen.

Für einen erfolgreichen landwirtschaftlichen Arbeitseinsatz ist ein komplexes Zusammenspiel der Maschinen unterschiedlicher Art in einer Prozesskette von großer Bedeutung. Es wurden daher Verfahren zur Planung solcher Prozessketten für einen landwirtschaftlichen Arbeitseinsatz entwickelt.

Die DE 10 2004 027 242 A1 betrifft ein Routenplanungssystem für landwirtschaftliche Arbeitsmaschinen, wobei der landwirtschaftlichen Arbeitsmaschine eine definierte Arbeitsbreite zugeordnet ist und eine diese Arbeitsbreite berücksichtigende Fahrtroute geplant wird, die bei sich ändernden äußeren Bedingungen, wie beispielsweise dem Umfahren von Hindernissen, angepasst werden kann.

Die EP 1 633 105 A1 offenbart ein System zur Beschaffung von Informationen, insbesondere von situationsbezogenen Prozess- und Planungsdaten, zur Abarbeitung von Prozessen durch eine landwirtschaftliche Arbeitsmaschine.

Die DE 10 2006 044 730 A1 beschreibt ein Verfahren zur Steuerung und Überwachung einer in einem Speicher hinterlegten Prozesskette, bei der die gesamte zu steuernde und zu überwachende Prozesskette auf einer Anzeigeeinrichtung, beispielsweise von einer Landmaschine, abgebildet wird, so dass ein Benutzer den Überblick über die gesamte Prozesskette behalten und den Prozess steuern und überwachen kann.

Die DE 10 2006 015 204 A1 beschreibt ein Verfahren zur Erstellung eines Routenplans für eine Gruppe von landwirtschaftlichen Maschinensystemen, wobei durch die Zusammenarbeit der Maschinensysteme ein Routenplan für ein abzuarbeitendes Territorium erstellt werden kann.

Die DE 10 2008 021 785 A1 betrifft ein Verfahren und eine Vorrichtung zum Koordinieren eines Bearbeitungsvorgangs einer landwirtschaftlichen Fläche, die für mehrere Fahrzeuge, mindestens ein Bearbeitungsfahrzeug und mindestens ein Transportfahrzeug, eine Routenplanung erstellt.

Die EP 2 146 307 A2 beschreibt ein Verfahren zum Koordinieren mehrerer fahrbarer landwirtschaftlicher Maschinen, die wenigstens eine Ressource gemeinsam nutzen, und es erlaubt, sämtliche Maschinen mit einem Höchstmaß an Auslastung zu betreiben.

Die WO 2011/104085 A1 beschreibt ein Verfahren zum Überwachen und Koordinieren von Ernteprozessen, bei dem die Füllstände und Füllraten der Korntanks von Erntemaschinen bestimmt werden und darauf basierend Abtankvorgänge geplant werden, um eine vorbestimmte Korntankkapazität zu erreichen.

Die DE 10 2008 050 460 A1 beschreibt ein Verfahren zur Steuerung eines Einsatzes von fahrbaren landwirtschaftlichen Maschinen auf einer Fläche mit mehreren Schritten, wobei in den folgenden Planungsschritten jeweils Festlegungen des vorhergehenden Schritts verfeinert werden und im Falle einer signifikanten Abweichung von den getroffenen Festlegungen während des Einsatzablaufs wenigstens einer der Planungsschntte wiederholt wird.

Es besteht jedoch Bedarf an weiter verbesserten Verfahren und Anordnungen zur Planung einer Prozesskette für einen landwirtschaftlichen Arbeitseinsatz. Insbesondere besteht Bedarf nach einem solchen Verfahren und einer Anordnung, die eine Optimierung einer Gesamtprozesskette nach verschiedenen Kriterien ermöglicht. Ferner besteht Bedarf an einem solchen Verfahren bzw. einer Anordnung, die es ermöglichen, schneller auf sich verändernde Bedingungen während des Arbeitseinsatzes zu reagieren.

Es ist daher die Aufgabe der Erfindung, ein Verfahren und eine Anordnung zur Planung einer Prozesskette für einen landwirtschaftlichen Arbeitseinsatz mit einer ersten Ressourcengesamtheit einer ersten Art landwirtschaftlicher Maschinen und einer zweiten Ressourcengesamtheit einer zweiten Art landwirtschaftlicher Maschinen bereitzustellen, die einen oder mehrere der genannten Bedarfe zumindest teilweise befriedigt.

Diese Aufgabe wird gelöst durch ein Verfahren gemäß Anspruch 1 und eine Anordnung gemäß Anspruch 12.

Der Erfindung liegt unter anderem die Erkenntnis zugrunde, dass durch einen hierarchischen Aufbau der existierenden Planungsverfahren Nachteile in der Planung bzw. suboptimale Planungsergebnisse entstehen können. Bei einer hierarchischen Planung werden in den folgenden Schritten die jeweils zuvor erfolgen Festlegungen verfeinert oder darauf aufbauend weitere Festlegungen getroffen. Wenn ein folgender Schritt keine Lösung liefert oder sich Randbedingungen geändert haben, kann die Planung ab einem bestimmten Schritt - wieder hierarchisch - neu vorgenommen werden. Trotzdem entstehen bei hierarchischen Planungsverfahren oft suboptimale Gesamtprozessketten, beispielsweise mit Wartezeiten, erhöhtem Verschleiß oder Kraftstoffverbrauch, so dass auch die Produktivität der Prozesskette insgesamt noch verbessert werden kann. Vermehrt treten solche suboptimalen Situationen bei sich verändernden Bedingungen während des landwirtschaftlichen Arbeitseinsatzes auf, wie beispielsweise das unerwartete Auftreten von Hindernissen auf einem Fahrweg, plötzliche Wetterumschwünge oder Veränderungen der Ernteguteigenschaften, die sich auf beispielsweise die erforderlichen Abtankzeitpunkte zum Entleeren des Korntanks eines Erntefahrzeugs auswirken können. Die Erfindung basiert unter anderem auf der Erkenntnis, dass durch die Festlegung in einem vorhergehenden Schritt in den nachfolgenden Schritten eine Vielzahl von möglichen Lösungen dieses nachfolgenden Plartungsschrittes ausgeschlossen wird. Dieser Ausschluss kann beispielsweise auf verschiedenen Gründen bzw. Bedingungen beruhen: für die Interaktionen von landwirtschaftlichen Maschinen der gleichen aber insbesondere auch unterschiedlichen Arten bestehen Beziehungen technischer Art, die bestimmte Kombinationen unmöglich machen. Beispielsweise müssen für einen Abtankvorgang die Erntemaschine und das Überladefahrzeug für einen bestimmten Zeitraum mit gleicher Geschwindigkeit parallel in geringem Abstand zueinander fahren. Insbesondere im Ernteprozess ergeben sich aus der Abarbeitung durch Erntemaschinen mögliche Fahrwege für die Servicefahrzeuge; bzw. bei der Aussaat sind durch die säenden Maschinen bereits bearbeitete Bereiche möglichst nicht mehr durch das Servicefahrzeug zu befahren. Andere Gründe können aus der (Feld-)Geometrie resultieren, wenn beispielsweise eine Hanglage das Befahren nur in einer bestimmten Richtung zulässt.

Das Verfahren ermöglicht es daher, unter Einhaltung der technischen und (feld-)geometrischen Randbedingungen mehrere Lösungen, insbesondere in nachfolgenden Planungsschritten, zu betrachten und damit zu einer besser abgestimmten Gesamtprozesskette zu gelangen.

Die Lösung sieht vor, dass zunächst auf einer statischen Vorplanung aufgebaut wird. Diese umfasst zumindest die Ermittlung, wie viele Maschinen welcher Art zum Einsatz kommen sollen, was abhängig ist von der zu bearbeitenden Fläche, vom Einsatzzeitraum, das heißt der für den Einsatz zur Verfügung stehenden Zeit, und von der Art des Arbeitseinsatzes.

Eine hierarchische Planung wie bei existierenden Planungsverfahren wird aufgegeben und stattdessen ein Lösungsraum ermittelt; mit einer Mehrzahl von verschiedenen möglichen Gesamtprozessketten, die aus ersten und zweiten - sowie ggf. dritten und weiteren - Teilprozessketten zusammengesetzt sind.

Auf diese Weise wird das Problem gelöst, dass bei einer hierarchischen Planung in einem vorhergehenden Planungsschritt eine Festlegung getroffen wird, die eine Vielzahl von Möglichkeiten nachfolgender Planungsschritte ausschließt.

Das Verfahren trifft für die Maschinen der ersten Ressourcengesamtheit keine Festlegung auf eine einzige Lösung, sondern ermittelt eine Mehrzahl von möglichen ersten Teilprozessketten. Wenn es sich beispielsweise bei der ersten Ressourcengesamtheit um Erntemaschinen handelt, wird zunächst eine Mehrzahl von möglichen Teilprozessketten für diese Erntemaschinen bestimmt.

Die Vorgaben oder Eingangsgrößen, unter denen diese Mehrzahl von ersten Teilprozessketten bestimmt wird, betreffen beispielsweise die Feldgeometrie (äußere Feldgrenzen, Hindernisse auf dem Feld oder auf Zugangswegen, Lage und Beschaffenheit von Zugangswegen und Feldzugangspunkten, Bodeneigenschaften, Anforderungen zur Bodenschonung/-verdichtung, Drillrichtung, Ernteguteigenschaften etc.), technische Rahmendaten (Maschinenparameter der eingesetzten Maschinen), externe Informationen (beispielsweise Wetterdaten) oder Sensordaten der Ressourcen (beispielsweise jeweilige Position der Maschinen, Ernteguteigenschaften). Diese Vorgaben oder Eingangsgrößen dienen insbesondere auch dazu, dass keine Lösungen generiert werden, die beispielsweise aufgrund technischer Rahmenbedingungen der Maschine oder der Feld- und Zufahrtswegegeometrie nicht ausführbar sind.

Im Ergebnis beinhaltet eine auf diesen Vorgaben aufbauende erste Teilprozesskette insbesondere verkettete Fahrspuren für jede Maschine, Vorgaben zur zeitabhängigen Position der Maschinen. Auch Angaben zur Ort-Zeit-Punkten zu erforderlichen Interaktionen mit anderen Maschinen, insbesondere einer anderen Ressourcengesamtheit, werden vorzugsweise ermittelt, beispielsweise Positionen der Überladefenster, die von einem Überladefahrzeug zum Abtanken eines Erntefahrzeugs erreicht werden müssen. Zur Ermittlung der ersten Teilprozessketten kann beispielsweise ein Suchgraph erzeugt werden, in dem anhand von Heuristiken eine Vorzugsrichtung generiert wird.

Für die Bearbeitung einer Fläche durch landwirtschaftliche Maschinen ergeben sich somit unter den gleichen Vorgaben mehrere verschiedene Lösungsmöglichkeiten, so dass in diesem Schritt zunächst eine Mehrzahl von alternativen ersten Teilprozessketten für die erste Ressourcengesamtheit erstellt wird. Die Ermittlung der Mehrzahl von alternativen ersten Teilprozessketten für die erste Ressourcengesamtheit kann auch als Lösung eines ersten Optimierungsproblems bezeichnet werden.

In einem nächsten Schritt wird dann für jede der ermittelten alternativen ersten Teilprozessketten zumindest eine zweite Teilprozesskette für die zweite Ressourcengesamtheit ermittelt. Im genannten Beispiel der Erntemaschinen als erste Ressourcengesamtheit wird nun in einem folgenden Schritt für die verschiedenen möglichen Fahrspuren der Erntemaschinen und sich damit ergebenden verschiedenen Ort-Zeit-Punkte zur Überladung des Ernteguts an ein Überladefahrzeug jeweils zumindest eine zweite Teilprozesskette für ein solches Überladefahrzeug bestimmt, das heißt ein zeitbehafteter Pfad für das Überladefahrzeug ermittelt.

Eingangsgrößen für diesen Schritt der Ermittlung der zweiten Teilprozesse sind vorzugsweise zum einen der Lösungsraum des ersten Optimierungsproblems, das heißt die Mehrzahl der alternativen ersten Teilprozessketten, sowie die auch bereits für das erste Optimierungsproblem verwendeten Informationen zur Feldgeometrie (äußere Feldgrenzen, Hindernisse auf dem Feld oder auf Zugangswegen, Lage und Beschaffenheit von Zugangswegen und Feldzugangspunkten, Bodeneigenschaften, Anforderungen zur Bodenschonung/-verdichtung, Drillrichtung, etc.). Vorzugsweise werden auch technische Rahmendaten (Maschinenparameter der eingesetzten Maschinen) für die zweite Ressourcengesamtheit eingesetzt. Die ermittelten ersten Teilprozessketten bestimmen insbesondere auch den möglichen Lösungsraum für die zweiten Teilprozessketten mit, beispielsweise durch Festlegung der zu einem bestimmten Zeitpunkt abgeernteten und dadurch bevorzugt befahrbaren Feldbereiche.

Aus der Kombination jeder der alternativen ersten Teilprozessketten mit der jeweils zugehörigen zweiten Teilprozesskette ergibt sich somit eine Mehrzahl von Gesamtprozessketten. Diese Mehrzahl von Gesamtprozessketten enthält Lösungen, die bei einer hierarchischen Planung nicht ermittelt worden wären, beispielsweise weil sie auf einer ersten Teilprozesskette beruhen, die unter einem bestimmten Kriterium schlechter abschneidet als beispielsweise eine andere erste Teilprozesskette. Auch für die auf den ersten Blick weniger vorteilhaften ersten Teilprozessketten werden vorzugsweise jeweilige zweite (und ggf. dritte oder weitere) Prozessketten ermittelt und zu Gesamtprozessketten kombiniert. Im Ergebnis kann somit eine Gesamtprozesskette aus einer weniger vorteilhaften ersten Teilprozesskette und einer vorteilhaften zweiten Teilprozesskette insgesamt eine bessere Lösung ergeben als die Kombination einer vorteilhaften ersten Teilprozesskette und einer weniger vorteilhaften zweiten Teilprozesskette (weil für die vorteilhafte erste Teilprozesskette beispielsweise die vorteilhafte zweite Teilprozesskette nicht möglich ist).

Auf diese Weise wird das Problem umgangen, dass durch eine frühe Festlegung auf eine bestimmte Teilprozesskette Nachteile bzw. suboptimale Lösungen bezüglich der nachfolgenden Teilprozessketten in Kauf genommen werden müssen. Im Gegensatz zu bekannten hierarchischen Planungsverfahren kann das hier dargestellte Planungsverfahren unter Berücksichtigung der technischen Wechselwirkungen zwischen den verschiedenen Maschinen zu besseren Gesamtergebnissen kommen.

Nach dem Kombinieren der alternativen ersten Teilprozessketten für die erste Ressourcengesamtheit mit der jeweils zugehörigen mindestens einen zweiten Teilprozesskette für die zweite Ressourcengesamtheit zu einer Mehrzahl von Gesamtprozessketten wird dann anschließend eine der Gesamtprozessketten ausgewählt. Vorzugsweise wird die Gesamtprozesskette oder ein für eine jeweilige Maschine relevanter Teil davon bzw. entsprechende Informationen auf die Maschinen der ersten und/oder zweiten Ressourcengesamtheit übertragen.

Das hier dargestellte Verfahren verknüpft somit drei Planungsverfahren, nämlich eine statische Vorplanung, eine Planung der ersten Ressourcengesamtheit und eine Planung der zweiten Ressourcengesamtheit. Die auf der statischen Vorplanung aufbauenden Schritte erfolgen dabei vorzugsweise zur Ausführungszeit, das heißt während des Arbeitseinsatzes. Dies hat den Vorteil, dass die aktuelle Situation und sich daraus ergebende Randbedingungen zur Zeit des Arbeitseinsatzes in der Planung berücksichtigt werden können.

Ein weiterer wichtiger Vorteil des Verfahrens ist es, für komplexe landwirtschaftliche Anwendungsfälle eine Gesamtprozesskette ermitteln zu können, die nach einem oder vorzugsweise mehreren Kriterien optimiert wurde. Besonders vorteilhaft ist es beispielsweise, die insgesamt kostengünstigste Prozesskette, die sich aus den genannten Teilprozessketten ergibt, zu ermitteln. Auf diese Weise kann auch die Effizienz der Prozesskette für einen landwirtschaftlichen Arbeitseinsatz insgesamt erhöht werden.

Das Verfahren realisiert die genannten Vorteile auch insbesondere dann, wenn nicht nur zweite Teilprozessketten, sondern auch dritte oder mehr Teilprozessketten in weiteren Schritten für dritte bzw. weitere Ressourcengesamtheiten ermittelt werden. Dabei kann es insbesondere bevorzugt sein, dass auch in den zweiten, dritten oder weiteren Teilprozessketten für jede der alternativen Teilprozessketten des vorangegangenen Schritts jeweils eine Mehrzahl von alternativen Teilprozessketten des folgenden Schritts ermittelt wird.

Diese weiteren Ressourcengesamtheiten können dabei einen großen Einfluss auf die Gesamtprozesse ausüben. So kann beispielsweise eine aufeinander abgestimmte Füllmenge zwischen Überladefahrzeug und Straßentransportfahrzeug eine Minimierung der Überladezeiten zur Folge haben, da das Straßentransportfahrzeug zum vollständigen Füllen nur einmal angefahren werden muss. Diese abgestimmte Füllmenge ist aber bereits beim Beladen des Überladefahrzeugs durch die Mähdrescher zu beachten. Es ist daher bevorzugt, dass als Eingangsgrößen zur Ermittlung der jeweiligen Teilprozesskette auch technische Bedingungen oder vorteilhafte Parameter der nachfolgenden Ressourcengesamtheiten berücksichtigt werden, wie beispielsweise zu erreichende Füllmengen der Transportfahrzeuge.

Wenn eine Ressourcengesamtheit immobile oder semimobile Ressourcen enthält, wird bei der Ermittlung von Teilprozessketten keine Bewegungsplanung erstellt, sondern für die jeweilige Ressourcenart passende Ergebnisse ermittelt, die wiederum Einfluss auf andere Teilprozessketten, insbesondere anderer Ressourcengesamtheiten haben können. Beispielsweise kann die Anzahl, Lage, Zugänglichkeit und Annahmekapazität von Silos oder Lagern die Bewegungsplanung der Transportfahrzeuge beeinflussen oder beispielsweise aufgrund von Füllstandsprognosen Silos oder Lager unterschiedlich befüllt werden.

Das bevorzugte Verfahren hat ferner den Vorteil, dass es nur geringere Rechenleistung sowie Rechenzeit, insbesondere auch in den im Folgenden beschriebenen Fortbildungsformen, erfordert, da insbesondere für da Anwendungsgebiet Einsatz auf landwirtschaftlichen Maschinen, insbesondere Erntemaschinen für den Einsatz und die Planung am laufenden Prozess geeignet sein muss.

Das Verfahren kann dadurch fortgebildet werden, dass jede der alternativen ersten Teilprozessketten Bewegungsparameter, wie vorzugsweise Fahrgeschwindigkeit und/oder Lenkbewegungen, für die Maschinen der ersten Ressourcengesamtheit enthält, und/oder jede der zweiten Teilprozessketten für die zweite Ressourcengesamtheit Bewegungsparameter, wie vorzugsweise Fahrgeschwindigkeit und/oder Lenkbewegungen, für die Maschinen der zweiten Ressourcengesamtheit enthält.

In dieser bevorzugten Fortbildungsform enthalten die Ergebnisse der ersten und/oder zweiten Teilprozessketten nicht nur die verketteten Fahrspuren sowie bestimmte zu erreichende Ort-Zeit-Punkte, wie beispielsweise Rendezvous-Positionen zum Abtanken zwischen Erntefahrzeug und Überladefahrzeug, sondern darüber hinaus Bewegungsparameter für die jeweiligen Maschinen, insbesondere Fahrgeschwindigkeit und/oder Lenkbewegungen. Ein Problem bei existierenden Planungsverfahren ohne die Ermittlung solcher Bewegungsparameter ist es beispielsweise, dass Stillstandszeiten auftreten, weil eine Maschine mit einer höheren Geschwindigkeit als notwendig zu der zu erreichenden Position gefahren wurde. Neben der Stillstandszeit führt dies zusätzlich zu höheren Kosten aufgrund eines höheren Kraftstoffverbrauchs und höherem Verschleiß bei höheren Geschwindigkeiten. Mit der bevorzugten Ermittlung von Bewegungsparametern hingegen können für die zurückzulegenden Wege, insbesondere auch für Teilstrecken, Bewegungsparameter, wie Fahrgeschwindigkeiten und/oder Lenkbewegungen, vorgegeben werden, die zum Erreichen einer bestimmten Position zu einer bestimmten Zeit erforderlich sind und gleichzeitig den Kraftstoffverbrauch und/oder den Verschleiß der Maschine und/oder eine ungewollte Bodenverdichtung oder andere unerwünschte Nebeneffekte reduzieren. Die Angabe unterschiedlicher Bewegungsparameter für Teilstrecken ist insbesondere bevorzugt, wenn sich die Bedingungen auf verschiedenen Teilstrecken unterscheiden, beispielsweise wenn diese auf unterschiedlichem Untergrund zurückzulegen sind.

Die Ermittlung von Bewegungsparametern, auch für Teilstrecken, ist insbesondere dann von Vorteil, wenn während des laufenden landwirtschaftlichen Arbeitseinsatzes eine Um- bzw. Neuplanung erfolgt, beispielsweise aufgrund von sich ändernden Randbedingungen, wie etwa auftretende Hindernisse im Feld oder auf den Zufahrtswegen, unerwartete Wetterumschwünge, Maschinenstopps aufgrund von Störungen des Arbeitsprozesses (beispielsweise aufgrund von Steinen im Feld oder durch ein verstopftes Schneidwerk) oder Wartungsarbeiten. Hier ändern sich durch die Neu- bzw. Umplanung meist auch die vorteilhaften Bewegungsparameter. Insbesondere in solchen Situationen der Um- bzw. Neuplanung bei bereits teilweise erfolgtem Arbeitseinsatz ermöglicht es die Ermittlung geänderter Bewegungsparameter, zu einem vorteilhafteren Gesamtprozess zu gelangen.

Vorzugsweise enthalten die ersten und/oder zweiten Teilprozessketten auch Interaktionsparameter, wie beispielsweise Überlademengen oder Füllstände bzw. Füllstandsbereiche. Dies ist insbesondere bevorzugt, wenn beispielsweise die Abtankzeitpunkte und abzutankenden Füllmengen vor dem Hintergrund der maximalen Füllkapazität der Straßentransportfahrzeuge bestimmt wird.

Das Verfahren kann dadurch fortgebildet werden, dass bei der Ermittlung der ersten und/oder zweiten Teilprozessketten, insbesondere der Bewegungsparameter, technische Rahmenbedingungen einzelner Maschinen, wie beispielsweise mögliche Lenkwinkeleinstellungen in Abhängigkeit von der Geschwindigkeit, und/oder Interaktionsbedingungen zwischen den Ressourcengesamtheiten berücksichtigt werden.

In dieser Fortbildungsform werden für die Planung der jeweiligen Teilprozessketten relevante Maschinenparameter berücksichtigt, wie beispielsweise kinematische und dynamische Randbedingungen. Dies erfolgt insbesondere mit dem Ziel, keine technisch nicht ausführbaren Lösungen zu generieren, Insbesondere für die Planung der Bewegungsparameter, wie Fahrgeschwindigkeit und/oder Lenkbewegungen, werden vorzugsweise Maschinenparameter, wie mögliche Lenkwinkeleinstellungen in Abhängigkeit von der Fahrgeschwindigkeit, oder zulässige Betriebszustände berücksichtigt.

Für die Interaktion zwischen Ressourcengesamtheiten können sich zusätzliche Restriktionen ergeben, beispielsweise muss die Parallelfahrt von Überladefahrzeug und Erntefahrzeug beim Abtanken parallel, mit gleicher Geschwindigkeit und in die gleiche Richtung erfolgen. Auch die Berücksichtigung von Interaktionsparametern, wie beispielsweise Überlademengen oder Füllstände bzw. Füllstandsbereiche ist bevorzugt. Mit der Berücksichtigung dieser Rahmenbedingungen wird sichergestellt, dass die ermittelten Teilprozessketten auch von den jeweiligen Ressourcengesamtheiten ohne technischen Probleme oder Verlassen vorgegebener Betriebszuständen ausgeführt werden können.

Das Verfahren kann dadurch fortgebildet werden, dass die ersten und/oder zweiten Teilprozessketten und/oder die Gesamtprozessketten mit Werten in mehreren, vorzugsweise gewichteten, Kriterien belegt werden.

Diese Fortbildungsform sieht vor, dass mehrere Kriterien berücksichtigt werden, die abbilden, wie bevorzugt eine Lösung unter verschiedenen Gesichtspunkten ist. Auf diese Weise wird eine multikriterielle Planung möglich, die gegenüber existierenden Verfahren, die nur ein (Optimierungs-)Kriterium einsetzen, zu verbesserten Planungsergebnissen kommen, die insbesondere näher am Gesamtproduktivitätsoptimum liegen. Gemäß der Fortbildungsform werden die ersten und/oder zweiten Teilprozessketten und/oder die Gesamtprozessketten mit jeweiligen Werten in den unterschiedlichen Kriterien belegt, die vorzugsweise angeben, ob ein Kriterium gut oder weniger gut erfüllt wird. Da die unterschiedlichen Kriterien eine unterschiedlich starke Bedeutung haben können, sind diese Kriterien vorzugsweise gewichtet. Insbesondere ist es bevorzugt, die Kriterien nutzerindividuell gewichten zu können, da für unterschiedliche, nutzerindividuelle Anwendungszusammenhänge unterschiedliche Gewichtungen erforderlich sein können.

Bevorzugte Kriterien können beispielsweise sein: Stillstandszeiten, Auslastung, Verschleiß (beispielsweise aufgrund von Fahrtrouten quer zur Drillrichtung oder auf ungünstigem Untergrund), Kraftstoffverbrauch, erforderliche Zeit, Wegstrecke, Bodenverdichtung, Bestandsvernichtung (beispielsweise durch Durchfahren des Bestands mit einem Überladefahrzeug), Korntankfüllstände, Anzahl der erforderlichen Abtankvorgänge oder Transportfahrten, Ertragsmenge, Erntegutqualität (beispielsweise Verluste, Siloverdichtung), Ladungsverluste.

Vorzugsweise kann die Gewichtung der Kriterien auch zur Laufzeit, das heißt während des Einsatzes, verändert werden und somit zu neuen bzw. veränderten Ergebnissen führen, insbesondere wenn entsprechend eine Neu- bzw. Umplanung im Laufenden Prozess erfolgt.

Das Verfahren kann dadurch fortgebildet werden, dass alle Werte auf eine gemeinsame Vergleichsskala umgerechnet werden und ein Gesamtwert, vorzugsweise durch Addition der umgerechneten Werte und ggf. durch Multiplikation mit Gewichtungsfaktoren der Kriterien, für jede erste und/oder jede zweite und/oder jede Gesamtprozesskette gebildet wird.

Um eine Vergleichbarkeit der Werte über die verschiedenen Kriterien hinweg und damit eine Gesamtbewertung der unterschiedlichen Lösungen zu ermöglichen, ist es bevorzugt, die Werte auf eine gemeinsame Skala umzurechnen. Insbesondere bieten sich Kosten als gemeinsame Vergleichsskala an. Es daher ist bevorzugt, dass die Werte in den verschiedenen Kriterien mittels Kostenfunktionen in Kostenwerte umgerechnet werden. Dies sind beispielsweise Kosten je Liter Kraftstoff und Maschinenstundensätze. Eine mögliche Gewichtung der Kriterien kann durch Multiplikation der Kostenwerte mit dem Gewichtungsfaktor erfolgen. Die jeweiligen Kostenfunktionen für die verschiedenen Kriterien sind vorzugsweise ebenfalls Vorgaben oder Eingangsgrößen für die Ermittlung der ersten und/oder zweiten Teilprozessketten und/oder der Gesamtprozessketten, so dass auch die Ergebnisse der jeweiligen Ermittlungsschritte vorzugsweise in Kosten umgerechnete Werte enthalten. Für jede erste und/oder zweite Teilprozesskette und/oder jede der Gesamtprozessketten wird vorzugsweise durch Addition der ggf. durch Multiplikation mit Gewichtungsfaktoren gewichteten Einzelwerte in den verschiedenen Kriterien ein Gesamtkostenwert über alle Kriterien ermittelt. Vorzugsweise werden die Gesamtkostenwerte der ersten und jeweils zugehörigen zweiten Teilprozessketten addiert zu einem Gesamtkostenwert der jeweiligen Gesamtprozesskette.

Somit bestimmt nicht das Optimum einer einzelnen Ressource die Durchführung des Arbeitsprozesses, beispielsweise die maximale Auslastung der Maschine mit dem höchsten Stundensatz. Vielmehr werden eine multikriterielle Planung des Prozesses und eine multikriterielle Bewertung des Planungsergebnisses ermöglicht. So würde sich bei entsprechender Kriteriengewichtung beispielsweise eine Häckselkette nicht mehr daran ausrichten, dass der Feldhäcksler immer ausgelastet ist (singuläres Kriterium: maximales Auslasten der teuersten Ressource), sondern daran, dass die Verdichtung im Silo unter Beachtung der anfallenden Kosten optimal erfolgt (multikriterielles Ziel: gute Siloverdichtung bei niedrigen Gesamtkosten). Ein anderes Beispiel ist die Erzielung geringer Gesamtprozesskosten bei geringer Gesamtprozesszeit und definierter Erntegutqualität unter beispielsweise Einbeziehung der Kosten für den Transport des Ernteguts bis ins Silo anstelle einer alleinigen Betrachtung der Stillstandzeiten der Mähdrescher.

Durch die Umrechnung aller Werte auf eine gemeinsame Vergleichsskala (insbesondere durch Umrechnung mittels Kostenfunktionen in Kostenwerte unter Nutzung von Kosten als Vergleichsskala) ergibt sich der Vorteil, dass einerseits mehrere Kriterien berücksichtigt werden können und andererseits die Gesamtprozesskette einfach anhand der Vergleichsskala optimiert werden kann, so dass beispielsweise die insgesamt kostengünstigste Lösung ausgewählt werden kann, in der über die Umrechnung mittels Kostenfunktionen eine Mehrzahl von (ggf. gewichteten) Kriterien berücksichtigt wurde. Auf diese Weise kann auch für komplexe landwirtschaftliche Anwendungsfälle eine Gesamtprozesskette ermittelt werden, die insgesamt (vorzugsweise unter Berücksichtigung mehrerer Kriterien) die kostengünstigste Lösung darstellt. Insbesondere die Effizienz der Gesamtprozesskette für einen landwirtschaftlichen Arbeitseinsatz lässt sich somit in vorteilhafter Weise erhöhen.

Das Verfahren kann dadurch fortgebildet werden, dass das Auswählen einer der Gesamtprozessketten einen Vergleich der Gesamtwerte der Gesamtprozessketten umfasst.

Ein Vergleich der Gesamtwerte der Gesamtprozessketten ermöglicht es, eine Gesamtprozesskette auszuwählen, die unter Berücksichtigung mehrere Kriterien die beste Lösung darstellt. Insbesondere wenn eine Umrechnung in Gesamtkostenwerte mittels Kostenfunktionen erfolgt, kann so eine Gesamtprozesskette nahe dem Produktivitätsoptimum ausgewählt werden.

Die Erfindung kann dadurch fortgebildet werden, dass die zur Ermittlung der ersten Teilprozessketten und/oder der zweiten Teilprozessketten erforderliche Zeit dadurch verringert wird, dass bevorzugte Lösungsmuster eingesetzt werden.

In dieser Fortbildungsform wird vorzugsweise durch bestimmte Vorgehensweisen, wie beispielsweise das Zurückgreifen auf in der fachlichen Praxis bewährte Regeln oder "Faustformeln", die Zeit reduziert, die für die Ermittlung der Teilprozessketten erforderlich ist. Für den Schritt der Ermittlung der, vorzugsweise ersten, Teilprozessketten kann, beispielsweise wenn es sich dabei um Erntefahrzeuge handelt, auf in der Vergangenheit bewährte oder theoretisch vorgeplante Abfahrmuster für bestimmte Feldflächen zurückgegriffen werden. Auch die Aufteilung großer Feldflächen in mehrere Teilflächen kann zu einer schnelleren Lösung führen. Insbesondere können auch in der Praxis bewährte Regeln oder Schätzungen eingesetzt werden, um den Aufwand der Kostenermittlung für die Teilprozessketten zu reduzieren.

Ein Beispiel für eine mögliche Regel ist, dass die Mähdrescher möglichst im Verband fahren sollten, das heißt einen gewissen Maximalabstand voneinander möglichst nicht überschreiten (Ausnahmen sind möglich beispielsweise beim Anschnitt), damit das Überladefahrzeug keine großen Strecken zwischen den Mähdreschern zurücklegen muss. Ein anderes Beispiel ist ein Verfahren zur sogenannten Arbeitsbreitenanpassung, bei dem die Fahrspuren so geplant werden, dass (zumindest in Teilabschnitten des Feldes) schmalere Streifen geerntet werden (beispielsweise mit 85% Mindestarbeitsbreite einer Erntemaschine). Damit kann vermieden werden, dass aufgrund der Feldgeometrie am Ende ein schmaler Reststreifen Bestand übrigbleibt, wodurch die Arbeitsbreite der Erntemaschine nicht vollständig ausgenutzt werden kann. Das Verfahren der Arbeitsbreitenanpassung führt somit zu einer besseren Auslastung der Erntemaschinen.

Das Verfahren kann dadurch fortgebildet werden, dass eine Reduzierung der Menge der alternativen ersten Teilprozessketten erfolgt, vorzugsweise nach vorbestimmten Filtern.

Eine bevorzugte Möglichkeit zur Reduzierung der für die Planung erforderliche Zeit liegt darin, dass die Mehrzahl der ermittelten ersten Teilprozessketten reduziert wird durch Ausschluss von Lösungen, die beispielsweise zu keiner gültigen oder einer unvorteilhaften Lösung der zweiten Teilprozessketten führen würden. Dazu werden die bereits ermittelten ersten Teilprozessketten vorzugsweise nach vorbestimmten Filtern überprüft und dann nur erste Teilprozessketten mit bestimmten Eigenschaften als Basis für die Ermittlung der zweiten Teilprozessketten berücksichtigt.

Ein Beispiel hierfür ist die Prüfung des Ergebnisses anhand eines so genannten Überladekorridors, ob es sich um eine Lösung handelt, die vom Überladewagen erfüllt werden kann. Der Überladekorridor ist der Bereich des Feldes, in dem der letzte Abtankvorgang eines Mähdreschers stattfinden muss, bevor der Überladewagen das Feld verlässt und dort selbst abtankt. Dieser Überladekorridor ist durch die Geometrie des Feldes und dessen Zugangspunkte gegeben und kann statisch vorberechnet werden. Diese Vorgehensweise erlaubt es, viele Lösungen der ermittelten ersten Teilprozessketten auszuschließen ohne (rechenaufwändig) die die zugehörigen zweiten Teilprozessketten ermitteln zu müssen.

Das Verfahren kann dadurch fortgebildet werden, dass zur Ermittlung der ersten Teilprozessketten und/oder der zweiten Teilprozessketten ein Verfahren eingesetzt wird, das zu einem beliebigen oder vorbestimmten Zeitpunkt abgebrochen werden kann und ein bis zu diesem Zeitpunkt ermitteltes Optimierungsergebnis liefert.

Für die Ermittlung der zweiten Teilprozessketten, im Beispiel die Fahrwegeplanung der Überladefahrzeuge, bietet es sich beispielsweise an, einen Algorithmus zu wählen, der zu einer beliebigen Zeit unterbrochen werden kann und das bis zu diesem Zeitpunkt errechnete Optimum ausgibt (so genannter Anytime-Algorithmus).

Das bevorzugte Verfahren bietet gleichzeitig die Möglichkeit, die getrennten Schritte der Ermittlung der ersten und zweiten Teilprozessketten auch getrennt voneinander von ihrer für die Durchführung in Anspruch genommenen Zeit her zu optimieren: Da es sich bei den ersten und zweiten Teilprozessketten um Teilprozessketten für unterschiedliche Ressourcengesamtheiten handeln kann, können auch in Abhängigkeit von deren technischen Eigenschaften und Rahmenbedingungen für die Ermittlung der Teilprozessketten unterschiedliche Möglichkeiten zur Reduktion der Zeit zur Durchführung dieses Schrittes gewählt werden.

Das bevorzugte Verfahren ermöglicht es somit, die an sich widersprüchlichen Ziele einer genaueren Planung einerseits und andererseits einer schnelleren Anpassung der Planung im laufenden Prozess, das heißt Realisierung einer kürzeren Zeitdauer zur Durchführung der Planung, gleichzeitig zu realisieren.

Das Verfahren kann dadurch fortgebildet werden, dass die Schritte der Ermittlung der ersten und zweiten Teilprozessketten, deren Kombination und die Auswahl einer Gesamtprozesskette während des Einsatzes laufend wiederholt werden, wobei vorzugsweise die Zeit zur Durchführung der Schritte weniger als 1 Minute beträgt, insbesondere weniger als 10 Sekunden.

Es ist bevorzugt, dass die auf der statischen Vorplanung aufbauenden Schritte der Ermittlung der ersten Teilprozessketten und der zweiten Teilprozessketten, deren Kombination zu Gesamtprozessketten und die Auswahl einer bevorzugten Gesamtprozesskette zur Ausführungszeit laufend bzw. regelmäßig wiederholt werden, so dass auch bei Veränderungen der Rahmenbedingungen oder der Ist-Zustände und -Positionen der Maschinen jederzeit für den noch verbleibenden Arbeitseinsatz eine - gegebenenfalls unter den veränderten Bedingungen - optimierte Gesamtprozesskette ausgewählt wird. Da bei üblichen landwirtschaftlichen Arbeitseinsätzen, wie beispielsweise der Aberntung eines Feldes mit Mähdreschern, etwa 5 Abtankvorgänge pro Stunde auftreten können und die damit für die einzelnen Prozesse (das Anfahren des Mähdreschers, das Überladen (ca. 3 Minuten), ggf. Anfahren des zweiten Mähdreschers, ggf. das zweite Überladen, das Anfahren des Straßentransportfahrzeugs, das Überladen auf das Straßentransportfahrzeug (ca. 3 Minuten)) zur Verfügung stehende Zeitdementsprechend kurz ist, ist es bevorzugt, dass die Dauer zur Durchführung der Ermittlung der ersten und zweiten Teilprozessketten, deren Kombination und der Auswahl einer Gesamtprozesskette weniger als 1 Minute beträgt, vorzugsweise noch weniger als 10 Sekunden. Auf diese Weise wird sichergestellft, dass ein gegebenenfalls durch eine Veränderung der Umstände eintretender suboptimaler Prozess nicht zu lange andauert, während eine Neuplanung durchgeführt wird, sondern die Zeiten suboptimaler Prozessdurchführung durch eine möglichst kurze Dauer der Verfahrensneuplanung minimiert werden.

Besonders bevorzugt ist es, dass es innerhalb der genannten Zeiten auch möglich ist, die ermittelte Gesamtprozesskette bzw. Teilinformationen dazu an die einzelnen Maschinen weiterzugeben, bevorzugt drahtlos zu übertragen und dort anzuzeigen und/oder zur Maschinensteuerung zu verwenden.

Insbesondere bevorzugt ist es, dass das Verfahren die folgenden Schritte umfasst:
- Übertragen von Daten der Gesamtprozesskette oder eines für die jeweilige Maschinen relevanten Teils davon, insbesondere der Bewegungsparameter für die jeweilige Maschine, auf mindestens eine der Maschinen und
- Steuern einer Aktorik, insbesondere der Fahrgeschwindigkeit und/oder der Lenkbewegungen, dieser mindestens einen Maschine auf Basis der übertragenen Daten.

Die Ergebnisse der ermittelten Gesamtprozesskette oder zumindest Teile davon, insbesondere die für eine einzelne Maschine relevanten Informationen, werden vorzugsweise auf die jeweiligen Maschinen übertragen und dort zur Steuerung der Maschine genutzt. Diese Steuerung erfolgt vorzugsweise automatisch, semi-automatisch oder manuell. Beispielsweise können die übertragenen Daten direkt zur Maschinensteuerung ohne Bedienereingriff verwendet werden. Die Daten und ggf. daraus ermittelte bevorzugte Maschinenparameter oder Bewegungsparameter, wie Fahrgeschwindigkeit und/oder der Lenkbewegungen, können auch über eine visuelle Anzeige bzw. Mensch-Maschine-Schnittstelle einem Bediener angezeigt werden, so dass der Bediener entsprechend die Maschine steuern kann. In einer Mischform kann auch die automatische Steuerung auf einer visuellen Anzeige bzw. Mensch-Maschine-Schnittstelle einem Bediener angezeigt werden und dieser manuell eingreifen, wenn er eine andere Steuerung bevorzugt oder er beispielsweise ein unerwartetes Hindernis bemerkt.

Gemäß einem weiteren Aspekt der Erfindung wird die Aufgabe gelöst durch eine Anordnung zur Durchführung des erfindungsgemäßen Verfahrens, die Anordnung umfassend 1 bis m externe Systeme jeweils einer Datenbank und einer Programmlogik, 1 bis n Maschinensysteme mit jeweils einem Bordrechner, einer Mensch-Maschine-Schnittstelle und einer Kommunikationseinrichtung, vorzugsweise einer Funkkommunikationseinrichtung, Datenverbindungen, vorzugsweise drahtlose Datenverbindungen, zwischen den externen Systemen und den Maschinensystemen, wobei die Anordnung ausgebildet ist, eine optimierte Gesamtprozesskette mit einem Verfahren nach einem der vorgehgehenden Ansprüche zu ermitteln und auszuführen.

Die erfindungsgemäße Anordnung kann fortgebildet werden, um das erfindungsgemäße Verfahren und seine Fortbildungen durchzuführen. Zu den Ausführungsformen, spezifischen Merkmalen, Varianten und Vorteilen der der Anordnung und ihrer Fortbildungen wird auf die vorangegangene Beschreibung zu den entsprechenden Verfahrensmerkmalen verwiesen.

Eine bevorzugte Ausführungsform der Erfindung wird beispielhaft anhand der beiliegenden Figuren beschrieben. Es zeigen:
- Fig. 1:: eine schematische Darstellung der Eingangsgrößen, Durchführung und Ergebnisse des Verfahrens sowie des Arbeitseinsatzes;
- Fig. 2:: ein schematisches Ablaufdiagramm des Verfahrens;
- Fig. 3:: eine schematische Darstellung der mithilfe des Verfahrens ermittelten ersten Teilprozessketten, zweiten Teilprozessketten, der kombinierten Gesamtprozessketten sowie der ausgewählten Gesamtprozesskette bei zwei Ressourcengesamtheiten,
- Fig. 4:: eine schematische Darstellung von ermittelten ersten, zweiten und dritten Teilprozessketten, deren Kombination zu Gesamtprozessketten sowie eine ausgewählte Gesamtprozesskette bei drei Ressourcengesamtheiten; und
- Fig. 5:: eine schematische Darstellung einer Anordnung zur Durchführung des Verfahrens gemäß der Erfindung.

Für die Durchführung des Verfahrens wird im Folgenden für die Aberntung eines Feldes mit Mähdreschern beschrieben, wobei das Erntegut mit Überladefahrzeugen und Straßentransportfahrzeugen in Lager ader Silos verbracht wird. Das im Folgenden beschriebene, beispielhafte Verfahren kann jedoch ebenso auf andere landwirtschaftliche Arbeitseinsätze angewendet werden, beispielsweise das Abernten eines Feldes mit Feldhäckslern oder beispielsweise das Ausbringen von Dünger oder Saatgut auf einem Feld.

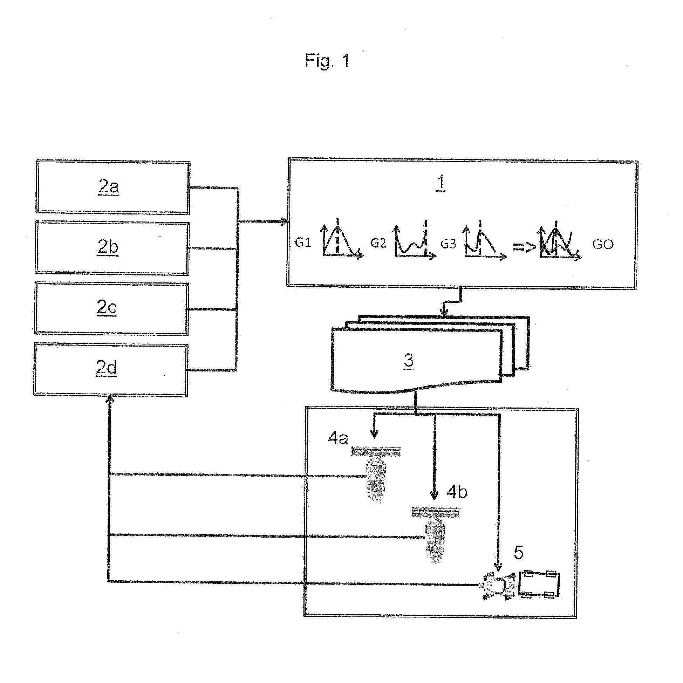

In Fig. 1 sind schematisch die Eingangsgrößen, die Durchführung und die Ergebnisse des Verfahrens sowie der Arbeitseinsatz dargestellt. Als Eingangsgrößen werden im dargestellten Beispiel Umweltinformationen 2a (beispielsweise Feldgrenzen, Ernteguteigenschaften), Maschineneigenschaften bzw. -parameter 2b (beispielsweise installierte Leistung), externe Dienste 2c (beispielsweise Wetterdaten) und Sensordaten 2d (beispielsweise Position, Ernteguteigenschaften) der Ressourcen. Mit diesen Eingangsgrößen 2a, 2b, 2c, 2d werden im Beispiels mittels des Verfahrens 1 eine Gesamtprozesskette ausgewählt (was im Folgenden noch näher beschrieben wird) und maschinenrelevante Informationen 3 dieser Gesamtprozesskette an zwei Mähdrescher 4a, 4b einer ersten Ressourcengesamtheit und an ein Überladefahrzeug 5 einer zweiten Ressourcengesamtheit übertragen. Die von diesen Maschinen 4a, 4b, 5 erfassten Daten können wiederum als Sensordaten 2d erfasst und als Eingangsdaten für das Verfahren 1 (beispielsweise für eine Neu- oder Umplanung) verwendet werden. Das Verfahren 1 berücksichtigt dabei nicht nur Optima G1, G2, G3 einzefiner Ressourcen, sondern ermittelt eine multikriteriell optimierte Gesamtprozesskette GO.

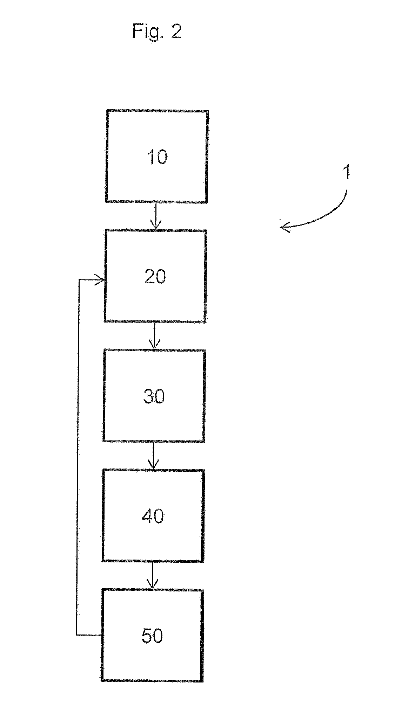

Das Verfahren 1 kann beispielsweise folgendermaßen ablaufen: Zunächst erfolgt im Schritt 10 gemäß Figur 2 eine statische Vorplanung mit Ermittlung der Anzahl der zum Einsatz kommenden Maschinen in der ersten und zweiten Ressourcengesamtheit, wobei dabei der Einsatzzeitraum, Art des Einsatzes und zu bearbeitende Feldfläche berücksichtigt werden. Beispielsweise kann für diese statische Vorplanung ein Verfahren gemäß der ersten drei Schritte des in den Absätzen 22 bis 35 der DE 10 2008 050 460 A1 beschriebenen Verfahrens angewendet werden.

Aufbauend auf dieser statischen Vorplanung erfolgen nun die weiteren Planungsschritte 20 (Ermittlung einer Mehrzahl von alternativen ersten Teilprozessketten für die erste Ressourcengesamtheit), 30 (Ermittlung mindestens einer zweiten Teilprozesskette für die zweite Ressourcengesamtheit für jede der alternativen Teilprozessketten für die erste Ressourcengesamtheit), 40 (Kombinieren der alternativen ersten Teilprozessketten für die erste Ressourcengesamtheit mit der jeweils zugehörigen mindestens einen zweiten Teilprozesskette für die zweite Ressourcengesamtheit zu einer Mehrzahl von Gesamtprozessketten) und 50 (Auswählen einer der Gesamtprozessketten) im laufenden Arbeitseinsatz.

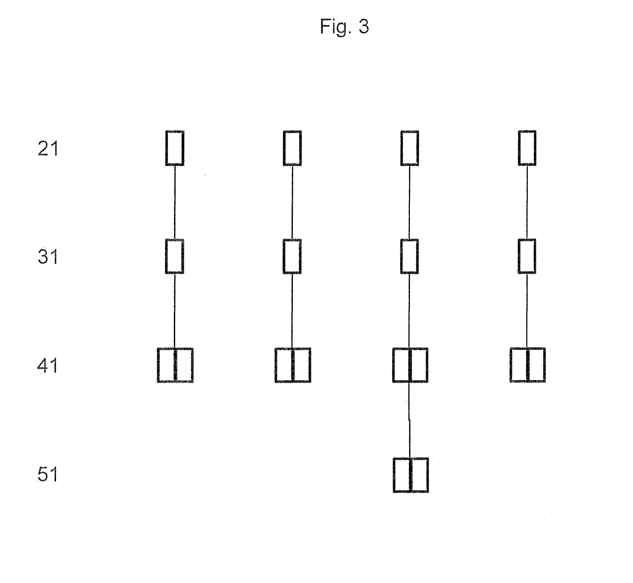

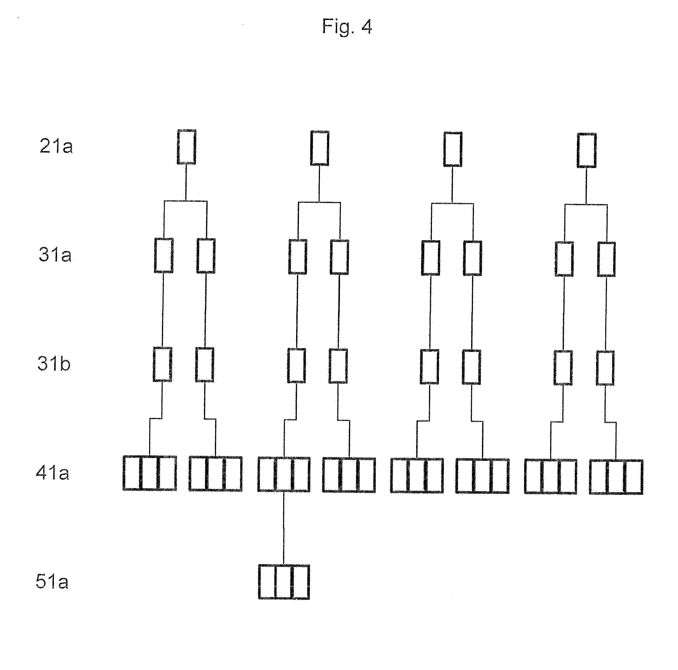

Dabei wird in Schritt 20, wie in Fig. 2 und 3 dargestellt, eine Mehrzahl erster Teilprozessketten 21 ermittelt. Im Schritt 30 wird für jede der ersten Teilprozessketten 21 eine zweite Teilprozesskette 31, die in Schritt 40 zu Gesamtprozessketten 41 kombiniert werden, aus denen in Schritt 50 eine Gesamtprozesskette 51 ausgewählt wird. Das entsprechende Vorgehen ist in Fig. 4 für drei Ressourcengesamtheiten dargestellt, wo für eine Mehrzahl erster Teilprozessketten 21a jeweils wiederum eine Mehrzahl (hier jeweils zwei) zweite Teilprozessketten 31 a ermittelt werden und für jede der zweiten Teilprozessketten 31 a dann mindestens eine dritte Teilprozesskette 31b ermittelt wird. Diese ersten, zweiten und dritten Teilprozessketten 21a, 31a, 31b werden dann zu Gesamtprozessketten 40a kombiniert und eine vorteilhafte Gesamtprozesskette 51a ausgewählt.

Vorzugsweise ist es eine Aufgabe des Verfahrens 1, die Bewegungsplanung 3 mehrerer kooperierender Landmaschinen 4a, 4b, 5 zu realisieren, die durch räumliche und zeitliche Nebenbedingungen miteinander gekoppelt sind. Dabei beruht die durch das Verfahren 1 gefundene Lösung vorzugsweise auf mehreren verschiedenen Kriterien.

Aufbauend auf einer statischen Vorplanung 10 erfolgt die Planung der Schritte 20 bis 50 im laufenden Prozess. Aufgrund seiner räumlichen und zeitlichen Nebenbedingungen besitzt dieses Planungsproblem eine hohe Komplexität. Daher ist es vorteilhaft, die Bewegungsplanung beispielsweise von Mähdreschern 4a, 4b und Überladewagen 5 in zwei getrennten Schritten 20, 30 oder auch zwei getrennten Optimierungsproblemen O1 und 02 durchzuführen.

Für das Optimierungsproblem O1 (Bewegungsplanung der Mähdrescher 4a, 4b) werden vorzugsweise unter anderem folgende Eingangsdaten bereitgestellt: Geometrie des zu bearbeitenden Feldes (äußere Feldgrenze, Hindernisse, Drillrichtung, Feldzugangspunkte), Anzahl und Art der teilnehmenden Fahrzeuge (inklusive relevanter Maschinenparameter, wie kinematische und dynamische Randbedingungen, Kapazität, Abladeleistung, Arbeitsbreite und Ernteleistung), Kostenfaktoren für Kriterien wie Strecke, Zeit und Kraftstoff.

Zur Lösung des Optimierungsproblems wird vorzugsweise ein Suchgraph erzeugt, in dem anhand von Heuristiken eine Vorzugsrichtung generiert wird. Das Ergebnis von O1 ist vorzugsweise ein Suchgraph mit einer Mehrzahl von alternativen ersten Teilprozessketten 21, die jeweils vorzugsweise folgende Informationen beinhalten: Verkettete Fahrspuren für jeden beteiligten Mähdrescher sowie Vorgaben zur zeitabhängigen Position der Mähdrescher, Position der Überladefenster, die vom Überladewagen erreicht werden müssen, zu überladende Erntegutmenge, Bewegungsparameter, wie vorzugsweise Fahrgeschwindigkeit und/oder Lenkbewegungen, Kosten der Lösung.

Für das Optimierungsproblem 02 (Bewegungsplanung Überladewagen) werden vorzugsweise unter anderem folgende Eingangsdaten bereitgesteltt: Ergebnis des O1 (Mehrzahl der ersten Teilprozessketten), Geometrie des zu bearbeitenden Feldes (zu einem bestimmten Zeitpunkt abgearbeitete Flächen, äußere Feldgrenze, Hindernisse, Drillrichtung, Feldzugangspunkte), Anzahl und Art der teilnehmenden Überladefahrzeuge (inklusive relevanter Maschinenparameter, wie kinematische und dynamische Randbedingungen, Kapazität, Abladeleistung), Kostenfaktoren für Kriterien wie Strecke, Zeit und Kraftstoff, Annahmekapazitäten am Feldrand.

Das Ergebnis des O2 (zweite Teilprozessketten 31) kann beispielsweise ein Suchgraph mit Lösungen sein, die jeweils vorzugsweise folgende Werte beinhalten: Zeitbehaftete Pfade für Überladefahrzeuge, zu überladende Erntegutmenge, Bewegungsparameter, wie vorzugsweise Fahrgeschwindigkeit und/oder Lenkbewegungen, Kosten der Lösung. Um eine bezüglich der definierten Kriterien optimierte Gesamtprozesskette zu finden, werden die jeweiligen ersten und zugehörigen zweiten Teilprozessketten 21, 31 zu Gesamtprozessketten 41 kombiniert und vorzugsweise auch die Gesamtkostenwerte der Gesamtprozessketten 41 gebildet. Dazu werden vorzugsweise die Werte in den Kriterien mittels Umrechnungsfunktionen auf eine Vergleichsskala umgerechnet, vorzugsweise mittels Kostenfunktionen in Kosten. Durch einen Vergleich der Gesamtkosten aller Gesamtprozessketten 41 kann eine multikriteriell optimierte Gesamtprozesskette 51 ausgewählt werden.

Durch die Umrechnung aller Werte mittels Kostenfunktionen in Kostenwerte unter Nutzung von Kosten als gemeinsamer Vergleichsskala können in vorteilhafter Weise mehrere Kriterien berücksichtigt werden. Ein weiterer Vorteil ergibt sich dadurch, dass die Gesamtprozesskette einfach anhand der Vergleichsskala optimiert werden kann, so dass beispielsweise die insgesamt kostengünstigste Lösung ausgewählt werden kann. Damit kann auch für komplexe landwirtschaftliche Anwendungsfälle eine Gesamtprozesskette mit erhöhter Effizienz und minimierten Kosten ermittelt werden.

Da die Randbedingungen von Arbeitseinsätzen sich stark unterscheiden können (beispielsweise hinsichtlich vorhandener Ressourcen, angebauter Früchte, Marktpreisen, Kraftstoffpreisen) ist vorzugsweise eine individuelle Gewichtung der Kriterien möglich. Damit können anwenderspezifische Planungsergebnisse erzeugt werden.

Vorzugsweise kann die Gewichtung der Kriterien auch zur Laufzeit verändert werden und somit zu neuen bzw. veränderten Planungsergebnissen führen. Beispielsweise wird ein Ernteprozess mit dem Ziel minimaler Kosten gestartet. Durch einen prognostizierten Wetterumschwung ergibt sich während der Durchführung des Prozesses, dass das Feld schnellstmöglich abgeerntet werden muss. Hierdurch wird das Kriterium "Zeit" entsprechend höher priorisiert und es wird zu Prozesslaufzeit ein neuer Plan erstellt und die Ressourcen folgen anschließend diesem neuen Plan.

Trotz der Trennung des Verfahrens in zwei Optimierungsprobleme können Nebenbedingungen wie die Größe des Feldes oder Anzahl der eingesetzten Maschinen dazu führen, dass die Berechnung aller Kombinationen der beiden Optimierungsprobleme nicht in wirtschaftlicher Zeit realisierbar ist. Dies ist vor allem dadruch bedingt, dass aufgrund dynamische veränderlicher Umweltbedingungen wie beispielsweise schwankender Ertrag ein kurzfristige Neuplanung im Prozess erforderlich macht.

Daher können folgende bevorzugte Maßnahmen integriert werden, um die erforderliche Rechenzeit zu reduzieren. Die Notwendigkeit zum Einsatz dieser Verfahren ist von der Komplexität des Problems, der zur Verfügung stehenden Rechenzeit, bedingt durch die Dynamik der Planung und der vorhandenen Rechenkapazität abhängig. Das Planungsverfahren ist prinzipiell aber auch ohne diese Verfahren einsetzbar. Es muss dabei berücksichtigt werden, dass durch den Einsatz der Maßnahmen evtl. nicht das rechnerisch mögliche Optimum erreicht wird.

Für das erste Optimierungsproblem (die Ermittlung der ersten Teilprozessketten) kann das Suchproblem beispielsweise durch den Einsatz von in Praxis üblichen Abfahrmustern von Feldflächen reduziert werden. Alternativ oder zusätzliche kann bei einem großen Feld und einer daraus resultierenden großen Anzahl von Fahrspuren das Problem durch Beetunterteilung in äquivalente Probleme aufgeteilt werden.

Das Gesamtverfahren kann vorzugsweise auch dadurch abgekürzt werden, dass geprüft wird, ob es sich um eine erste Teilprozesskette handelt, deren Ort-Zeit-Punkte für eine Abtankung von einem Überladewagen erreicht werden können (sogenannter möglicher Überladekorridor). Der Überladekorridor ist der Bereich des Feldes, in dem der letzte Abtankvorgang eines Mähdreschers stattfinden sollte, bevor der Oberladewagen das Feld verlässt und dort selbst abtankt. Dieser Überladekorridor ist durch die Geometrie des Feldes und dessen Zugangspunkte gegeben und kann statisch vorberechnet werden. Diese Vorgehensweise erlaubt es, viele erste Teilprozessketten auszuschließen, für die dann nicht rechenaufwändig die zweiten Teilprozessketten ermittelt werden müssen.

Für das zweite Optimierungsproblem (die Ermittlung der zweiten Teilprozessketten) kann beispielsweise nur eine Teilmenge aller möglichen Lösungen berechnet werden. Hier werden vorzugsweise sogenannte Anytime Algorithmen, wie z.B. Anytime A* eingesetzt, um in der als verfügbar bekannten Zeit ein für diese Zeit optimales Ergebnis zu finden.

Eine mögliche Vorgehensweise in der Praxis lässt sich wie folgt überblicksartig zusammenfassen:
1) Alle Lösungen des ersten Optimierungsproblems (die ersten Teilprozessketten) werden bestimmt, ggf. unter Einsatz von bevorzugten Maßnahmen zur Reduktion der Rechenzeit.
2) Ggf. werden diese Lösungen gefiltert durch Ausschluss von ersten Teilprozessketten, die nicht realisierbar Überladekorridore erfordern.
3) Es wird eine Untermenge der Lösungen des ersten Optimierungsproblems (der ersten Teilprozessketten) mit den geringsten Kosten (über mehrere Kriterien durch Umrechnung der Werte in Kosten) gebildet. Die Anzahl der Lösungen hängt von der Rechenzeit ab, die dem Planungssystem zur Verfügung stehen.
4) Für diese Untermenge wird jeweils das zweite Optimierungsproblem gelöst, das heißt die zugehörigen zweiten Teilprozessketten ermittelt.
5) Der Vergleich der Gesamtkosten der kombinierten ersten und zugehörigen zweiten Teilprozessketten ergibt die optimierte Gesamtlösung, das heißt Gesamtprozesskette.

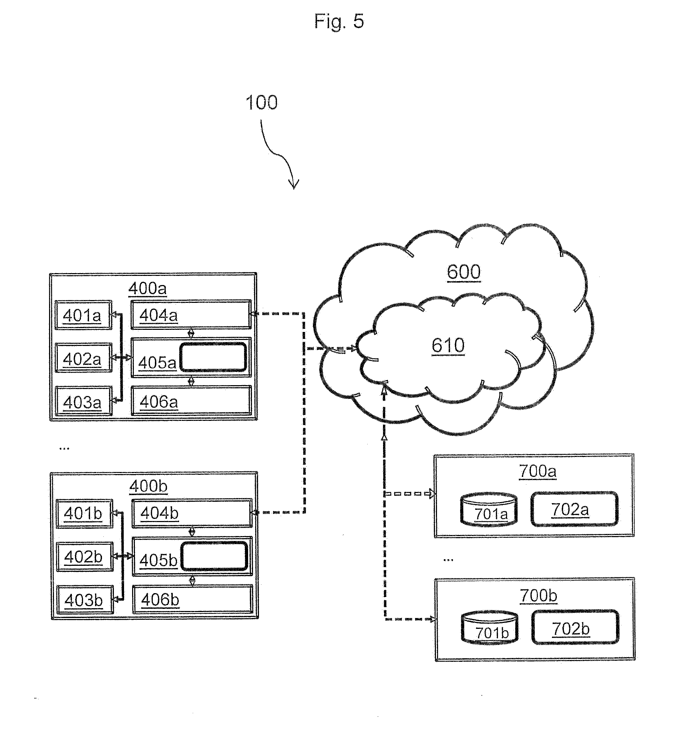

Fig. 5 zeigt eine beispielhafte Anordnung 100 zur Durchführung eines erfindungsmäßen Verfahrens 1. Die dargestellte Systemarchitektur 100 weist technischen Mittel zur Realisierung auf, die sich einteilen lassen in Mittel zur Informationsverarbeituhg, insbesondere zur Planung, Mittel zur Kommunikation zwischen den Maschinen und externen Systemen, Mittel zur Aufnahme der Umweltinformationen und Mittel zur Bereitstellung externer Informationen, zur Bereitstellung von Stammdaten und zur Bereitstellung historischer Informationen.

Die Mittel zur Informationsverarbeitung und Planung umfassen ein übergreifendes Planungssystem, das gemäß des Verfahrens 1 unter Beachtung der vorliegenden Informationen über beispielsweise Prozesszustände, das Optimum bzw. eine optimierte Lösung für den Gesamtprozess erreichen soll. Dieses Planungssystem ist verteilt bei allen beteiligten Maschinen vorhanden (verteiltes System). Dabei kann auf jeder Maschine ein unterschiedlich großer Teil an der Planung erfolgen, Beispielsweise ist es möglich, dass eine "Mastermaschine" existiert, die einen globalen, das heißt übergreifenden Plan für alle Maschinen mit einem groben Detaillierungsgrad erstellt. Hierbei werden beispielsweise Fahrspuren grob vorberechnet. Auf jeder einzelnen Maschine wird auf Basis der verteilten und ständig aktualisierten Grobplanung eine spezifische Feinplanung vorgenommen. Diese bestimmt beispielsweise auf Basis der grob bestimmten Fahrspuren, detailliert die Sollstrecke, die durch die Lenkung abgefahren werden kann.

Auf jeder Maschine 400a, 400b ist mindestens ein Bordrechner 405a, 405b vorhanden. Dieser umfasst mindestens eine Recheneinheit, mindestens eine Speichereinheit und mindestens eine Schnittstelle zu mindestens einer Kommunikationseinheit 404a, 404b. Diese Schnittstellen sind verbunden mit Bussystemen der Maschine, um Sensordaten zu erhalten, eine Maschinen-Aktorik 401 a, 401 b anzusteuern und Verbindungen zu weiteren Steuergeräten 402a, 402b zu haben. Weiterhin sind hierüber drahtlose Kommunikationssysteme und Mensch-Maschine-Schnittstellen 406a, 406b wie ein Monitor angebunden.

Die Mittel 404a, 404b zur Kommunikation zwischen den Prozessbeteiligten und externen Systemen basieren auf drahtlosen Datenverbindungen (Funkkommunikation). Zwischen den Maschinen werden hierfür aufgrund der Bandbreite und Latenzzeiten aber auch aufgrund des im ländlichen Bereich nicht immer zuverlässig vorhandenen Mobilfunknetzwerke wie GSM vorzugsweise Nahfunktechnologien wie beispielsweise WLAN verwendet, hierbei können unterstützend aber auch Mobilfunknetzwerke wie GSM genutzt werden. Zwischen Maschinen 400a, 400b und externen Systemen 700a, 700b werden aufgrund der Funkreichweite vorrangig Mobilfunknetzwerke wie beispielsweise GSM genutzt.

Aufbauend auf den durch die Funkprotokolle 600 bereitgestellten Kommunikationsschichten wird ab einer bestimmten Schicht des C7St-Sohichtenmodells, vorzugsweise ab Schicht 5 (Sitzungsschicht) eine Middleware 610 genutzt, die die Kommunikation in dem verteilten System übernimmt. Hierfür kann beispielsweise der Data Distribution Service (DDS) genutzt werden.

Die Mittel zur Aufnahme der Umweltinformationen können auf den Maschinen vorhandene oder nachrüstbare Sensorikelemente 403a, 403b sein. Solche Mittel können beispielsweise GPS-Systeme zur Positionsertnittlung oder Sensoren zur Durchflussmengenbestimmung sein.

Die Mittel 700a, 700b zur Bereitstellung externer Informationen (externe Systeme), zur Bereitstellung von Stammdaten und zur Bereitstellung historischer Informationen sind vorzugsweise Datenbanksysteme 701a, 701b, die eine Persistenz von Daten wie Maschinendaten oder Felddaten sicherstellen. Alternativ können die Informationen auch durch ein System mit Programmlogiken 701a, 702b zur Laufzeit aus Daten verschiedener weiterer Informationsquellen (beispielsweise Wettervorhersagen) generiert werden, In beiden Fällen sind die Systeme, die diese Informationsdienste zur Verfügung stellen, vorzugsweise zur Laufzeit durch das Planungssystem über die vorhandenen Kommunikationsmittel erreichbar.

## Patentansprüche

1. Verfahren (1) zur Planung einer Prozesskette für einen landwirtschaftlichen Arbeitseinsatz mit einer ersten Ressourcengesamtheit einer ersten Art landwirtschaftlicher Maschinen (4a, 4b), vorzugsweise Erntemaschinen wie Mähdrescher oder Feldhäcksler, und einer zweiten Ressourcengesamtheit einer zweiten Art landwirtschaftlicher Maschinen (5), wie Transportfahrzeuge,
mit den Schritten:
- Ermittlung (10) der Anzahl der zum Einsatz kommenden Maschinen in der ersten und in der zweiten Ressourcengesamtheit in Abhängigkeit von Einsatzzeitraum, Art des Einsatzes und zu bearbeitende Feldfläche;
- Ermittlung (20) einer Mehrzahl von alternativen ersten Teilprozessketten (21, 21a) für die erste Ressourcengesamtheit;
- Ermittlung (30) mindestens einer zweiten Teilprozesskette (31, 31 a) für die zweite Ressourcengesamtheit für jede der alternativen ersten Teilprozessketten (21, 21a);
- Kombinieren (40) der alternativen ersten Teilprozessketten (21, 21a) mit der jeweils zugehörigen mindestens einen zweiten Teilprozesskette (31, 31 a) zu einer Mehrzahl von Gesamtprozessketten (41, 41a);
- Auswählen (50) einer (51, 51a) der Gesamtprozessketten.

2. Verfahren (1) nach dem vorhergehenden Anspruch,
**dadurch gekennzeichnet, dass** jede der alternativen ersten Teilprozessketten (21, 21a) Bewegungsparameter, wie vorzugsweise Fahrgeschwindigkeit und/oder Lenkbewegungen, für die Maschinen (4a, 4b) der ersten Ressourcengesamtheit enthält, und/oder jede der zweiten Teilprozessketten (31, 31 a) für die zweite Ressourcengesamtheit Bewegungsparameter, wie vorzugsweise Fahrgeschwindigkeit und/oder Lenkbewegungen, für die Maschinen (5) der zweiten Ressourcengesamtheit enthält.

3. Verfahren (1) nach einem der vorhergehenden Ansprüche,
**dadurch gekennzeichnet, dass** bei der Ermittlung (20, 30) der ersten und/oder zweiten Teilprozessketten (21, 21a, 31, 31 a), insbesondere der Bewegungsparameter, technische Rahmenbedingungen einzelner Maschinen (4a, 4b, 5), wie beispielsweise mögliche Lenkwinkeleinstellungen in Abhängigkeit der Geschwindigkeit, und/oder Interaktionsbedingungen zwischen den Ressourcengesamtheiten berücksichtigt werden.

4. Verfahren (1) nach einem der vorhergehenden Ansprüche,
**dadurch gekennzeichnet, dass** die ersten und/oder zweiten Teilprozessketten (21, 21 a, 31, 31 a) und/oder die Gesamtprozessketten (41, 41 a) mit Werten in mehreren, vorzugsweise gewichteten, Kriterien belegt werden.

5. Verfahren (1) nach dem vorhergehenden Anspruch,
**dadurch gekennzeichnet, dass** alle Werte auf eine gemeinsame Vergleichsskala umgerechnet werden und ein Gesamtwert, vorzugsweise durch Addition der umgerechneten Werte und ggf. durch Multiplikation mit Gewichtungsfaktoren der Kriterien, für jede erste und/oder jede zweite Teilprozesskette (21, 21 a, 31, 31 a) und/oder jede Gesamtprozesskette (41, 41 a) gebildet wird.

6. Verfahren (1) nach dem vorhergehenden Anspruch,
**dadurch gekennzeichnet, dass** das Auswählen einer (51, 51 a) der Gesamtprozessketten (41, 41 a) einen Vergleich der Gesamtwerte der Gesamtprozessketten umfasst.

7. Verfahren (1) nach einem der vorhergehenden Ansprüche,
**dadurch gekennzeichnet, dass** die zur Ermittlung der ersten Teilprozessketten (21, 21 a) und/oder der zweiten Teilprozessketten (31, 31a) erforderliche Zeit dadurch verringert wird, dass bevorzugte Lösungsmuster eingesetzt werden.

8. Verfahren (1) nach einem der vorhergehenden Ansprüche,
**dadurch gekennzeichnet, dass** eine Reduzierung der Menge der alternativen ersten Teilprozessketten (21, 21 a) erfolgt, vorzugsweise nach vorbestimmten Filtern.

9. Verfahren (1) nach einem der vorhergehenden Ansprüche,
**dadurch gekennzeichnet, dass** zur Ermittlung der ersten Teilprozessketten (21, 21a) und/oder der zweiten Teilprozessketten (31, 31 a) ein Verfahren eingesetzt wird, dass zu einem beliebigen oder vorbestimmten Zeitpunkt abgebrochen werden kann und ein bis zu diesem Zeitpunkt ermitteltes Optimierungsergebnis liefert.

10. Verfahren (1) nach einem der vorhergehenden Ansprüche,
**dadurch gekennzeichnet, dass** die Schritte der Ermittlung (20, 30) der ersten und zweiten Teilprozessketten (21, 21a, 31, 31a), deren Kombination (40) und die Auswahl (50) einer Gesamtprozesskette (51, 51a) während des Einsatzes laufend wiederholt werden, wobei vorzugsweise die Zeit zur Durchführung der Schritte weniger als 1 Minute beträgt, insbesondere weniger als 10 Sekunden.

11. Verfahren (1) nach einem der vorhergehenden Ansprüche,
umfassend die Schritte:
- Übertragen von Daten der Gesamtprozesskette (51, 51 a) oder eines für die jeweilige Maschinen relevanten Teils davon, insbesondere der Bewegungsparameter für die jeweilige Maschine, auf mindestens eine der Maschinen (400a, 400b) und
- z Steuern einer Aktorik (4401a, 401 b), insbesondere der Fahrgeschwindigkeit und/oder der Lenkbewegungen, dieser mindestens einen Maschine (400a, 400b) auf Basis der übertragenen Daten.

12. Anordnung (100) zur Durchführung des Verfahrens nach einem der vorhergehenden Ansprüche,
umfassend
- 1 bis m externe Systeme (700a, 700b) mit jeweils einer Datenbank (701 a, 701 b) und/oder einer Programmlogik (702a, 702b),
- 1 bis n Maschinensysteme (400a, 400b) mit jeweils einem Bordrechner (405a, 405b), einer Mensch-Maschine-Schnittstelle (406a, 406b) und einer Kommunikationseinrichtung (404a, 404b), vorzugsweise einer Funkkommunikationseinrichtung,
- Datenverbindungen, vorzugsweise drahtlose Datenverbindungen, zwischen den externen Systemen (700a, 700b) und den Maschinensystemen (400a, 400b),
wobei die Anordnung ausgebildet ist, eine optimierte Gesamtprozesskette (51, 51a) mit einem Verfahren (1) nach einem der vorgehgehenden Ansprüche zu ermitteln und auszuführen.
